# EUROPÄISCHE PATENTSCHRIFT

(11) **EP 4 139 664 B1**
(45) Veröffentlichungstag und Bekanntmachung des Hinweises auf die Patenterteilung: **15.10.2025**
(21) Anmeldenummer: 20767955.6
(22) Anmeldetag: 20.08.2020
(51) Int. Cl.: G01N 21/88

(54) **LEUCHTENELEMENT FÜR EINEN PRÜFTUNNEL, LEUCHTENBAND UND PRÜFTUNNEL**
LUMINAIRE ELEMENT FOR AN INSPECTION TUNNEL, LUMINAIRE STRIP, AND INSPECTION TUNNEL
ÉLÉMENT DE LUMINAIRE DE TUNNEL D'INSPECTION, BANDE DE LUMINAIRE ET TUNNEL D'INSPECTION

(30) Priorität: 20.04.2020 DE 102020110722
(43) Veröffentlichungstag der Anmeldung: 01.03.2023
(73) Patentinhaber: Dürr Systems AG, 74321 Bietigheim-Bissingen (DE)
(72) Erfinder: WIELAND, Dietmar, 71336 Waiblingen (DE); TOBISCH, Wolfgang, 70184 Stuttgart (DE); DANLER, Andreas, 6176 Völs (AT); FÖGER, Daniel, 6424 Silz (AT); GSTREIN, Manfred, 6067 Absam (AT)
(74) Vertreter: RPK Patentanwälte Reinhardt und Kaufmann Partnerschaft mbB
(86) Internationale Anmeldenummer: PCT/DE2020/100727
(87) Internationale Veröffentlichungsnummer: WO 2021/213561

(56) Entgegenhaltungen:
- EP-A1- 0 792 452
- DE-A1- 102014 215 481
- DE-A1- 102015 116 144
- DE-A1- 4 309 727
- GB-A- 2 295 224
- US-A1- 2002 064 050
- US-A1- 2015 360 271
- US-A1- 2019 113 464

## Beschreibung

### Stand der Technik

Die Erfindung betrifft einen Prüftunnel mit einer Anordnung von mehreren Leuchtenbändern.

Solche Prüftunnels werden bei Fahrzeugherstellung zur Kontrolle insbesondere lackierter Oberflächen von Kraftfahrzeugen eingesetzt. Zur Beleuchtung der Arbeitsplätze, insbesondere der Kontrollplätze, werden zum einen üblicherweise Leuchtenelemente auf einer Rahmenunterstruktur eingesetzt, die, mit Leuchtstoffröhren bestückt, in unterschiedlicher Anordnung gewinkelt um das Substrat, hier der Fahrzeugkarosserie oder der Karosserieteile, angeordnet sind. Diese Leuchtenelemente strahlen diffus ab und erzeugen durch eine entsprechende Reflektorgeometrie der Leuchtenelemente ein Reflexbild auf dem Substrat. Die Ausrichtung dieser Reflexbilder und damit auch der Leuchtenelemente orientiert sich an der speziellen Aufgabe der Fehlersuche und ist dabei u.a. ergonomischen Gesichtspunkten untergeordnet. Bei dieser Anordnung von Leuchtenelemente wird durch das Auftreten von diffusem Licht nur ein Teil der eingesetzten Energie genutzt. Auch kann erhöhte Blendwirkung für die Inspekteure auftreten.

Zum anderen gibt es eine andere, neuere Konstellation, die auf indirekter Beleuchtung durch ein- oder mehrfache Reflexion über Aluminiumlamellen basiert, die durch Leuchtdioden angestrahlt werden. Hierbei sind entlang der gesamten Kontrollplatz-Länge horizontal verlaufende Lamellen installiert, die ein mehr oder weniger ausgeprägtes Reflexbild auf dem Substrat erzeugen.

Bei dieser Anordnung von Leuchtenelementen machen horizontal verlaufende Reflexstreifen aktives Suchen nach Reflexlinien im Seitenbereich der Karosserien durch den Inspekteur erforderlich. Große Unterschiede der Leuchtdichte-Reflexe können zu einem lokal unterschiedlich ausgeprägten Reflexlinienbild und zu einer instabilen Gesamtwahrnehmung führen. Auch können derartige Leuchtenanordnungen sehr teuer sein.

Die US 20190113464 A1 offenbart ein System zur Oberflächeninspektion. Hierfür sind modulare Lichtpaneele an Stirnseiten miteinander verbunden und bilden im verbundenen Zustand eine feste Lichttunnelgeometrie aus. Die Lichtpaneele weisen Reihen von LEDs, z. B. LED-Lichtstreifen, auf. Die LED-Streifen sind hinter einem Diffusor positioniert. Der Diffusor wird beispielsweise zwischen den Rahmenelementen getragen, die an ihren Enden durch Eckbefestigungen gesichert sind. Die LED-Streifen können halbstarr, starr oder biegsam sein. Die LED-Streifen sind konfigurierbar, um eine gewünschte Lichtabdeckung und Intensität zu erreichen. Die LED-Streifen können gemeinsam innerhalb einer Platte oder über mehrere Platten hinweg verdrahtet sein, z. B. mit elektrischen Verbindern, die zwischen Platten angeordnet sind. Die Paneele können rechteckig oder gekrümmt sein. Eine Steuerung kann zum Ändern der Intensität, der Farbe oder anderer Eigenschaften des von den Lichtpaneelen emittierten Lichts vorgesehen sein.

Die DE 10 2014 215481 A1 beschreibt einen Prüftunnel zur Prüfung von beschichteten Oberflächen von Kraftfahrzeugkarossen, wobei Leuchten als Leuchtbänder ausgestaltet sind und quer zur Längsachse des Prüftunnels angeordnet sind und wobei die Leuchten jeweils ein Gehäuse aufweisen, in dem in beiden seitlichen Randbereichen streifenförmige Platinen mit Leuchtdioden angeordnet sind. Die Leuchten weisen jeweils mindestens zwei Lichtaustrittsflächen auf, die durch mindestens ein Schwarzfeld getrennt sind, so dass sich durch eine Leuchte vier oder mehr scharfe Kontrastkanten bei der Beleuchtung der Karossen-Oberfläche bilden lassen. Die Leuchtdioden sind dabei auf einen Hohlraum innerhalb der Leuchte gerichtet.

Die US 2015/360271 A1 beschreibt eine gebogene Leuchtdiodenanordnung um lackierte Fahrzeugoberflächen während für Reparatur zu inspizieren. Die gebogene Leuchtdiodenanordnung weist ein Gehäuse auf, in dem in den seitlichen Randbereichen LED-Streifen angeordnet sind. Die Leuchtdiodenanordnung kann durch ein Stativ gehalten werden oder kann direkt auf die lackierte Oberfläche aufgelegt werden.

Die EP 0 792 452 A1 und die GB 2 295 224 A beschreiben eine Beleuchtungseinheit mit einem Gehäuse, in dem zwei parallele Leuchtstoffröhren in Längsrichtung des Gehäuses angebracht sind, die eine Licht-Intensitätsverteilung mit zwei Maxima in Querrichtung zum Gehäuse erzeugen. In GB 2 295 224 A wird die Verwendung mehrerer solcher Beleuchtungseinheiten zur Errichtung eines Prüftunnels erwähnt.

### Offenbarung der Erfindung

Eine Aufgabe der Erfindung ist die Bereitstellung eines Prüftunnels mit einer Anordnung von mehreren Leuchtenbändern, welche eine verbesserte Leuchtdichteverteilung aufweisen.

Die Aufgabe wird durch die Merkmale des unabhängigen Anspruchs gelöst. Günstige Ausgestaltungen und Vorteile der Erfindung ergeben sich aus den weiteren Ansprüchen, der Beschreibung und der Zeichnung.

Es wird ein Prüftunnel mit einer Tunnellängsachse vorgeschlagen, insbesondere zur Prüfung von glänzenden, insbesondere lackierten Fahrzeugkarosserien, mit einer Anordnung von mehreren Leuchtenbändern.

Die Leuchtenbänder weisen eine Anordnung von Leuchtenelementen auf, wobei die Leuchtenelemente an ihren stirnseitigen Anschlussbereichen miteinander verbunden sind. Insbesondere können dabei die Leuchtenelemente wenigstens bereichsweise auf einer bogenförmig gekrümmten Linie angeordnet sein, wobei die Lichtaustrittsflächen der Leuchtenelemente zu einer konkaven Innenseite der bogenförmigen Krümmung hin ausgerichtet sind.

Dabei sind die Leuchtenbänder quer zu der Tunnellängsachse nebeneinander angeordnet, wobei die Lichtaustrittsflächen der Leuchtenelemente auf einer konkaven Innenseite der bogenförmigen Krümmung einer Tunnelwandung zu einem zentralen Bereich der Tunnellängsachse hin ausgerichtet sind.

Die Leuchtenelemente für den Prüftunnel umfassen wenigstens zwei streifenförmige Anordnungen von Lichtquellen in einem Leuchtengehäuse mit wenigstens zwei, entlang einer Längserstreckung des Leuchtengehäuses einander gegenüber liegenden Randbereichen. Die streifenförmigen Anordnungen der Lichtquellen sind dabei entlang der Längserstreckung an den Randbereichen ausgebildet und eine Lichtaustrittsfläche des Leuchtengehäuses weist entlang der Randbereiche eine höhere Strahlungsstärke auf als in einem Mittenbereich.

Vorteilhaft kann der beschriebene Leuchtenaufbau mit Hilfe einer neuen Anordnung der Lichtquellen im Leuchtengehäuse zu einer verbesserten Leuchtdichteverteilung führen.

Anstatt wie bislang die Lichtquellen mittig der Lichtaustrittsflächen zu positionieren und damit eine von der Mitte zu den Randbereichen langsam abfallende Leuchtdichte mit einem niedrigen Gradienten zu erhalten, werden die Lichtquellen an den beiden Randbereichen des Leuchtengehäuses angebracht, wo der Übergang vom Leuchtengehäuse direkt zu maximaler Leuchtdichte einen hohen Gradienten der Leuchtdichte ermöglicht. Damit kann die Wahrscheinlichkeit erhöht werden, Fehler auf oder in dem zu untersuchenden Substrat, beispielsweise einer lackierten Oberfläche, zu detektieren. Zusätzlich entstehen bei dieser Anordnung der Lichtquellen auch großflächige Zonen niedriger und relativ homogener Leuchtdichte. Diese Bereiche können eine ungestörte, d.h. von hohen Kontrasten bereinigte, Inspektion der Oberfläche auf flächige Fehlerbilder wie Wolken, Schleier, Hologramme, etc. mit deutlich verbessertem Aufmerksamkeitspotenzial des Inspekteurs begünstigen. Damit können Fehler bei der Inspektion reduziert werden.

Vorteilhaft lässt sich eine vorteilhafte Leuchtdichteverteilung durch einerseits hohe Kontraste am Übergang des Leuchtengehäuses zur Lichtaustrittsfläche und ungestörte, optisch beruhigte Bereiche erzielen.

Mit dem verlustarmen Strahlungsprinzip kann ein hoher Systemwirkungsgrad erreicht werden.

Gemäß einer vorteilhaften Ausgestaltung des Prüftunnels kann die Lichtaustrittsfläche des Leuchtengehäuses des jeweiligen Leuchtenelements wenigstens einen Diffusor und eine Abdeckscheibe aufweisen. Gemäß einer weiteren vorteilhaften Ausgestaltung des Leuchtenelements kann außerdem zwischen dem Diffusor und der Abdeckscheibe eine Multiprismenscheibe angeordnet sein.

Der Leuchtenaufbau basiert auf dem Prinzip der Hinterleuchtung, wobei die Lichtstrahlen vor dem Verlassen des Leuchtenelements durch ein Scheibenpaket treten, das vorzugsweise aus einer diffusen Scheibe, einer Multiprismenscheibe und einer schützenden Abdeckscheibe besteht.

Die Multiprismenscheibe kann dabei insbesondere der zusätzlichen Reduktion einer möglichen Blendwirkung für den Inspekteur dienen.

Gemäß einer vorteilhaften Ausgestaltung des Prüftunnels können die Lichtquellen des jeweiligen Leuchtenelements eine oder mehrere Leuchtdioden und/oder eine oder mehrere Leuchtstoffröhren und/oder einen oder mehrere Lichtleiter umfassen.

Als Leuchtmittel können bevorzugt Leuchtdioden (LEDs) wie beispielsweise Mid-Power-LEDs mit einem Lichtstrom von 20 bis 100 Lumen und einer Lichtausbeute von ca. 180 Lumen/Watt) zum Einsatz kommen. Alternativ können jedoch auch Bauarten nach dem Leuchtstoffröhrenkonzept eingesetzt werden. Leuchtdioden und Leuchtstoffröhren sind sehr energieeffiziente und langlebige Leuchtmittel und können deshalb die Betriebskosten niedrig halten. Beim Einsatz von Lichtleitern können die Leuchtmittel an einer zentralen Stelle angeordnet sein und beispielsweise günstig mit Energie versorgt und auch gekühlt werden.

Gemäß einer vorteilhaften Ausgestaltung des Prüftunnels können die Lichtquellen des jeweiligen Leuchtenelements farbvariabel, insbesondere als Leuchtdioden (LEDs) mit einstellbarer Farbtemperatur, ausgebildet sein.

Optional können Lichtquellen mit LEDs variabler Farbtemperatur Verwendung finden. Damit kann dann z.B. die Lichtfarbe an den Farbton des Substrats oder an die Vorstellung des Inspekteurs angepasst werden. Die LEDs können auf einem Leuchteneinsatz aus z.B. zur Erhöhung der Reflexion weiß lackiertem Stahlblech oder Aluminiumblech oder einer Kunststofftafel montiert und verkabelt werden. Die zugehörigen Treiber der LEDs können z.B. auf der Rückseite der Leuchteneinsatz montiert werden. Bei einem Defekt der Treiber oder der LEDs kann das Leuchtengehäuse rückseitig geöffnet werden, um den Leuchteneinsatz samt LEDs und Treibern auszutauschen. Die rückseitige Öffnung des Gehäuses kann z.B. über das Entfernen eines Deckels erfolgen, der z.B. mittels Schrauben am Gehäusekörper befestigt ist. Die Befestigung des Deckels kann auch alternativ über Vorreiber oder ähnlichem erfolgen. Die Leuchteneinsätze können z.B. im Leuchtengehäuse eingeschraubt, geklemmt oder anderweitig befestigt sein.

Die Lichtfarbe der Lichtquellen in einem Leuchtenelement kann entweder fix sein und sich z.B. zwischen 2700 K (warmweiß) und 6500 K (kaltweiß) bewegen. So ist beispielsweise auch eine "Zebraanordung" möglich, bei der abwechselnd kaltweiße und warmweiße Leuchtenelemente oder andere Reihenfolgen zum Einsatz kommen.

Die Leuchtenelemente können dimmbar ausgeführt sein. Der Grad der Dimmung kann sich z.B. am Farbton des Substrats orientieren. Der Farbton des Leuchtenelements kann an den Farbton des Substrats angepasst werden.

Gemäß einer vorteilhaften Ausgestaltung des Prüftunnels kann das Leuchtengehäuse stirnseitige Anschlussbereiche quer zu den Randbereichen aufweisen, welche zur Verbindung benachbarter Leuchtenelemente ausgebildet sind. Auf diese Weise lassen sich mehrere Leuchtenelemente günstig zu einem längeren Leuchtenband zusammensetzen, um größere Substrate zu untersuchen.

Gemäß einer vorteilhaften Ausgestaltung des Prüftunnels können die stirnseitigen Anschlussbereiche des jeweiligen Leuchtenelements als standardisierte Anschlusselemente zur mechanischen und/oder elektrischen Verbindung benachbarter Leuchtenelemente ausgebildet sein. Dadurch können mehrere Leuchtenelemente effizient zu einem längeren Leuchtenband zusammengesetzt werden, um größere Substrate zu untersuchen.

Gemäß einer vorteilhaften Ausgestaltung des Prüftunnels kann das Leuchtengehäuse des jeweiligen Leuchtenelements bogenförmig gekrümmt ausgebildet sein, wobei die Lichtaustrittsfläche zu einer konkaven Innenseite der bogenförmigen Krümmung hin ausgerichtet ist. Gekrümmte Leuchtenelemente können günstig zu einem gekrümmten Leuchtenband zusammengesetzt werden, um große Objekte beispielsweise in einem Prüftunnel zu inspizieren.

Gemäß einer vorteilhaften Ausgestaltung des Prüftunnels kann der Mittenbereich der Lichtaustrittsfläche des jeweiligen Leuchtenelements eine geringere Transparenz aufweisen als der Randbereich; insbesondere kann der Mittenbereich lichtundurchlässig ausgebildet sein.

Damit lassen sich Zonen hohen Kontrasts am Randbereich des Leuchtenelements, insbesondere zur Wahrnehmung punktueller Fehler erzielen. Unterschiedlich helle Zonen der Lichtaustrittsfläche kann die Erkennung flächiger Fehler wie beispielsweise Wolken, Schleier etc. in einer Lackoberfläche verbessern.

Um mit einem Leuchtenelement mehrere Leuchtstreifen im Reflexbild erzeugen zu können, kann z.B. ein lichtundurchlässiger Streifen oder mehrere Streifen innen, z.B. mittig, auf die Lichtaustrittsfläche aufgebracht werden. Dieser kann dann vorteilhafterweise zum Leuchtquellenraum hin hochreflektierend ausgeführt sein. Unter Umständen kann es auch vorteilhaft sein, den Raum zwischen den LEDs und dem Scheibenpaket zu trennen, mit dem Ziel, Bereiche unterschiedlicher Lichtfarben zu schaffen. Dazu kann z.B. eine Trennwand diesen Raum z.B. mittig aufteilen. Auch diese Trennwand kann dann hochreflektierend ausgeführt sein. Hier können dann die beiden LED-Bänder rechts und links der Trennwand mit unterschiedlichen Farbtemperaturen ausgeführt werden. Ohne Trennwand können unterschiedliche Farbtöne auch über Farbfilter realisiert werden, die im Bereich des Scheibenpakets platziert werden können.

Gemäß einer vorteilhaften Ausgestaltung des Prüftunnels kann das Leuchtengehäuse rückseitig öffenbar ausgebildet sein, insbesondere kann das Leuchtengehäuse rückseitig mit einer Wartungsöffnung ausgebildet sein. Auf diese Weise lassen sich defekte Lichtquellen und/oder Treiberstufen einfach austauschen, ohne das Leuchtenelement komplett demontieren zu müssen.

Gemäß einer vorteilhaften Ausgestaltung des Prüftunnels können die Lichtquellen des jeweiligen Leuchtenelements auf einem Trägerelement angeordnet sein. Insbesondere kann das Trägerelement zur Lichtaustrittsfläche hin reflektierend ausgebildet sein. Damit lässt sich der Kontrast des austretenden Lichtbündels zur Erhöhung der Reflexion auf dem zu untersuchenden Substrat vorteilhaft erhöhen. Auch können so günstig unterschiedliche Farbtemperaturen der Lichtquellen in dem Leuchtenelement realisiert werden.

Gemäß einer vorteilhaften Ausgestaltung des Prüftunnels kann das Leuchtengehäuse des jeweiligen Leuchtenelements geschlossen ausgebildet sein. Vorteilhaft können die Lichtquellen auf einem Trägerelement geklebt angeordnet sein. Eine weitere Variante stellt dar, das Leuchtengehäuse geschlossen auszuführen und als "Wegwerf-Leuchte" zu konzipieren. Der Leuchteneinsatz mit Lichtquellen und Treibern kann dann beispielsweise im Leuchtengehäuse eingeklebt sein.

Gemäß einer vorteilhaften Ausgestaltung des Prüftunnels können Endstücke des jeweiligen Leuchtenbands durch ebene Leuchtenelemente gebildet sein, zwischen denen gekrümmte Leuchtenelemente angeordnet sind.

Die zu einem Leuchtenband, welches beispielsweise eine bogenähnliche Struktur aufweisen kann, gefügten einzelnen Leuchtenelemente können so stirnseitig miteinander verschraubt sein. Dafür können z.B. 6 gebogene Leuchtenelemente mit je 1420 mm Länge und 2 ebene Leuchtenelemente mit je 750 mm eingesetzt werden. Dadurch, dass die Lichtaustrittsfläche annähernd die Länge des Leuchtengehäuses aufweist, entstehen in Umfangsrichtung nur minimale Strecken, auf denen die Lichtaustrittsfläche unterbrochen ist. Mit dieser nahezu kontinuierlichen Lichtaustrittsfläche kann auf dem Substrat ein vorteilhaftes, da annähernd ununterbrochenes, Reflexbild entstehen.

Um einzelne Leuchtenelemente mit einer Einzellänge von z.B. 1400 mm zu einem durchgängigen Leuchtenband zu kombinieren, können diese, um leuchtfreie Bereiche zu vermeiden, an den Kopfseiten zusammengeschraubt oder zusammengesteckt werden.

Hier könnten z.B. auch die Energiezufuhr und die Steuersignale über die insbesondere standardisierte Steckverbindung von einem Leuchtenelement zum nächsten weitergeleitet werden.

Durch die konzentrische Anordnung der Leuchtenelemente sind die Lichtstrahlen im Wesentlichen auf das Substrat, also beispielsweise eine lackierte Fahrzeugkarosserie gerichtet. Das erhöht zum einen die Lichtausbeute und reduziert zum anderen die Direktblendung der Inspekteure.

Die Breite der einzelnen Leuchtenbänder kann beispielsweise bei 200 mm liegen und der Freiraum zwischen den Lichtbögen beispielsweise 500 mm betragen. Damit ist sowohl eine ausreichend hohe Anzahl an Kontrastübergängen verfügbar, als auch ausreichend visuell "ungestörter" Raum, der ebenfalls zur Inspektion des gesamten Substrats benötigt wird.

Vorteilhaft kann durch den Einsatz der beschriebenen Leuchtenbänder mit den erfindungsgemäßen Leuchtenelementen in einem solchen Prüftunnel eine Fahrzeugkarosserie durch die Art der Beleuchtung optisch herausmoduliert werden.

Der Kontrollplatz kann für den Inspekteur durch die neuartige Beleuchtung positiv erlebbar werden, was zu einer besseren Effizienz bei der Inspektion des Substrats führt.

Auf diese Weise ist ein sehr gezieltes, auf die Karosserie hin orientiertes Arbeiten mit geringem Ermüdungseffekt möglich. Durch ein detailliert ausgearbeitetes Verhältnis der Leuchtdichten von Inspektionsraum zu Umfeld ist es möglich, wenig Blendwirkung und dadurch psychologisch festigendes Schauen des Inspekteurs zu erreichen.

Es kann so eine verbesserte Ergonomie durch deutlich reduzierte Blendwirkung sowie eine Reflexorientierung derart umgesetzt werden, dass bei der Fehlersuche keine unangenehmen (Kopf-)Bewegungen durchgeführt werden müssen.

Zuverlässigere Inspektion ist durch ein nahezu kontinuierliches Reflexbild auf der Karosserie ermöglicht.

Mit dem erfindungsgemäßen Prüftunnel ergeben sich Anwendungsmöglichkeiten im Bereich der Fehlerkontrolle, z.B. von großen Substraten wie Karosserien oder auch fertiggestellten Fahrzeugen. Weiterhin können diese Kontrollplätze auch für andere Substrate, wie Stoßfänger, Spiegelgehäuse etc. eingesetzt werden. Außerdem ergeben sich günstige Einsatzmöglichkeiten auch abweichend zu dem Einsatz bei der Lackkontrolle durch eine gleichmäßige Ausleuchtung weiterer Arbeitsplätze.

Gemäß einer vorteilhaften Ausgestaltung des Prüftunnels können die Leuchtenbänder in einem vorgegebenen Rastermaß beabstandet angeordnet sein. Damit können günstige Reflexmuster für gezielte Inspektionen bestimmter Fehlermuster von Substraten eingestellt werden. Auch kann so eine Fehlerkontrolle über einen weiten Bereich von lokal begrenzten Fehlermustern bis zu großflächigen Fehlermustern günstig erreicht werden.

Gemäß einer vorteilhaften Ausgestaltung des Prüftunnels können Leuchtenelemente verschiedener Leuchtenbänder Lichtquellen mit unterschiedlicher Farbtemperatur aufweisen, insbesondere im Bereich zwischen 2700 K und 6500 K.

Die Farbtemperatur kann innerhalb eines Leuchtenbands konstant sein und ein benachbartes Leuchtenband eine andere Farbtemperatur aufweisen. Insbesondere können dabei benachbarte Leuchtenbänder alternierende Reihenfolgen von hohen und niedrigen Farbtemperaturen aufweisen.

Die Lichtfarbe der Lichtquellen in einem Leuchtenband kann entweder fix sein und sich z.B. zwischen 2700 K (warmweiß) und 6500 K (kaltweiß) bewegen. So ist beispielsweise auch eine "Zebraanordung" möglich, bei der abwechselnd kaltweiße und warmweiße Leuchtenbänder oder andere Reihenfolgen zum Einsatz kommen.

Die Leuchtenelemente können dimmbar ausgeführt sein. Der Grad der Dimmung kann sich z.B. auch am Farbton des Substrats orientieren und auch den Farbton des Leuchtenelements an den Farbton des Substrats anpassen.

Gemäß einer vorteilhaften Ausgestaltung des Prüftunnels können Bereiche zwischen den Leuchtenbändern Oberflächen vorgegebener, insbesondere unterschiedlicher Reflexionsgrade aufweisen. Insbesondere kann dabei das Material der Oberfläche Reflexionsgrade zwischen 20% und 70%, bevorzugt zwischen 27% und 55%, bezogen auf einen Wellenlängenbereich sichtbaren Lichts und bei senkrechtem Lichteinfall, aufweisen.

Jeder Leuchtstreifen erzeugt auf dem Substrat oben beschriebene Hell-Dunkel-Kontrastbereiche durch den Eintritt und Austritt in den Leuchtstreifen, in deren Übergang die Fehler wie z.B. Lackeinschlüsse, die als punktuelle Abweichung einer ebenen Fläche erscheinen, als Linienverformung erkannt werden können.

Um auch auf hellen Flächen, z.B. weiß, einen ausreichenden Kontrast wahrnehmen zu können, wurde für eine beispielhafte Umfeld-Leuchtdichte ein Mindest-Kontrastverhältnis von 1:1,7 ermittelt. Auf dieser Basis kann die Auslegung eines Leuchtenelements realisiert werden. Um bei diesen Kontrast-Bedingungen eine psychologisch festigende Umgebung {"stabiles Schauen") im Grenzfeld sehr heller und sehr dunkler Substrate zu schaffen, können die notwendigen Reflexionsgrade der Materialien ermittelt werden, die zwischen den Leuchtenbändern angebracht werden können.

Diese Reflexionsgrade können z.B. zwischen 27% und 55%, jeweils bezogen auf einen Wellenlängenbereich sichtbaren Lichts und bei senkrechtem Lichteinfall, liegen.

Vorteilhaft kann auch sein, den Raum zwischen den Leuchtenbändern mit matten Paneelen, z.B. in den Architekturfarben nach Le Corbusier oder anderen natürlichen Erdfarbtönen, die ein angenehmes Raumempfinden vermitteln, auszuführen. Die Paneele können z.B. aus Textil, Kunststoff, Holz oder Metallblechen ausgebildet sein. Es kann eine Folie als Beschichtung mit Farbton verwendet werden.

Gemäß einer vorteilhaften Ausgestaltung des Prüftunnels kann wenigstens ein Leuchtenband parallel zur Tunnellängsachse verlaufend angeordnet sein, wobei die Lichtaustrittsflächen der Leuchtenelemente zur Tunnellängsachse hin ausgerichtet sind.

Für den Einsatz eines Prüftunnels zur Verwendung mit großen Substraten, wie z.B. Karosserien, kann es vorteilhaft sein, ergänzend zu den, zu der Tunnellängsachse, quer verlaufenden Leuchtenbändern auch längs verlaufende Leuchtenbänder gleicher Bauart einzusetzen. Dadurch lassen sich weitere vorteilhafte Reflexmuster, bzw. Kontrastwechsel auf dem Substrat erzeugen.

Gerade bei der Inspektion von z.B. Haube und Heckdeckel einer Karosserie kann es vorteilhaft sein, längs verbaute Leuchtenbänder zu installieren, da dort häufig eine Bewegung des Kontrolleurs quer zur Karosserie stattfindet. Bei dieser natürlichen Bewegung des Kontrolleurs quer zur Karosserie findet dann ein Kontrastwechsel hell/dunkel ohne zusätzliche Kopfbewegung statt.

Gemäß einer vorteilhaften Ausgestaltung des Prüftunnels können Leuchtenbänder im Boden in Tunnellängsachse und/oder quer zur Tunnellängsachse angeordnet sein.

Wenn Leuchtenbänder im Boden des Prüftunnels zum Einsatz kommen, können diese günstigerweise vom Leuchtdichteverlauf her analog der in der Tunnelwandung verbauten Leuchtenbänder aufgebaut sein und sich somit zu einem einheitlichen Reflexbild auf nahezu allen Bereichen des Substrats, z.B. einer Karosserie, fügen.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht auf ein Leuchtenelement nach einem Ausführungsbeispiel der Erfindung mit eingezeichneten Schnittlinien B-B und D-D;
- Fig. 2: einen Längsschnitt durch das Leuchtenelement in der Schnittebene D-D gemäß Figur 1;
- Fig. 3: eine isometrische Darstellung des Leuchtenelements gemäß Figur 1;
- Fig. 4: einen schematischer Querschnitt durch das Leuchtenelement in der Schnittebene B-B gemäß Figur 1;
- Fig. 5: einen schematischer Querschnitt durch ein Leuchtenelement nach einem weiteren Ausführungsbeispiel der Erfindung;
- Fig. 6: eine Draufsicht auf ein gebogenes Leuchtenelement nach einem weiteren Ausführungsbeispiel der Erfindung mit einer eingezeichneten Schnittlinie A-A;
- Fig. 7: einen Längsschnitt durch das Leuchtenelement gemäß Figur 6 in der Schnittebene A-A;
- Fig. 8: einen Querschnitt durch einen Prüftunnel nach einem Ausführungsbeispiel der Erfindung;
- Fig. 9: einen Längsschnitt durch den Prüftunnel gemäß Figur 8;
- Fig. 10: einen Leuchtdichteverlauf quer über zwei erfindungsgemäße Leuchtenelemente; und
- Fig. 11: Farbtemperaturanordnungen von Leuchtenbändern eines Prüftunnels nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

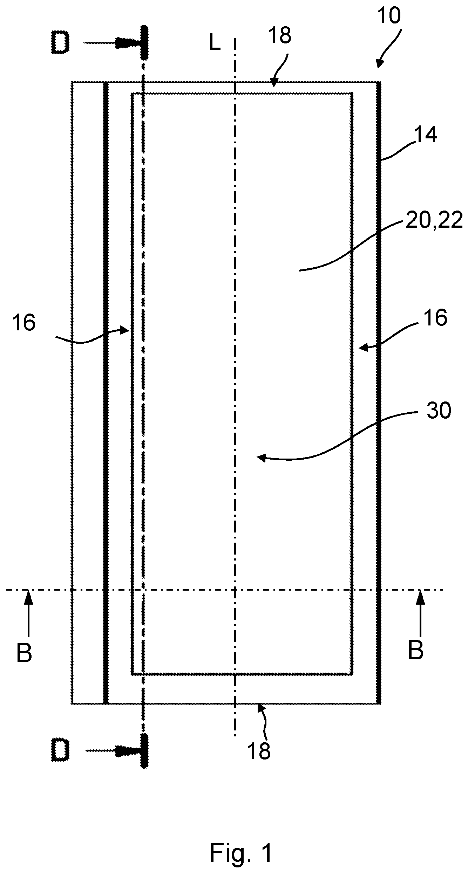

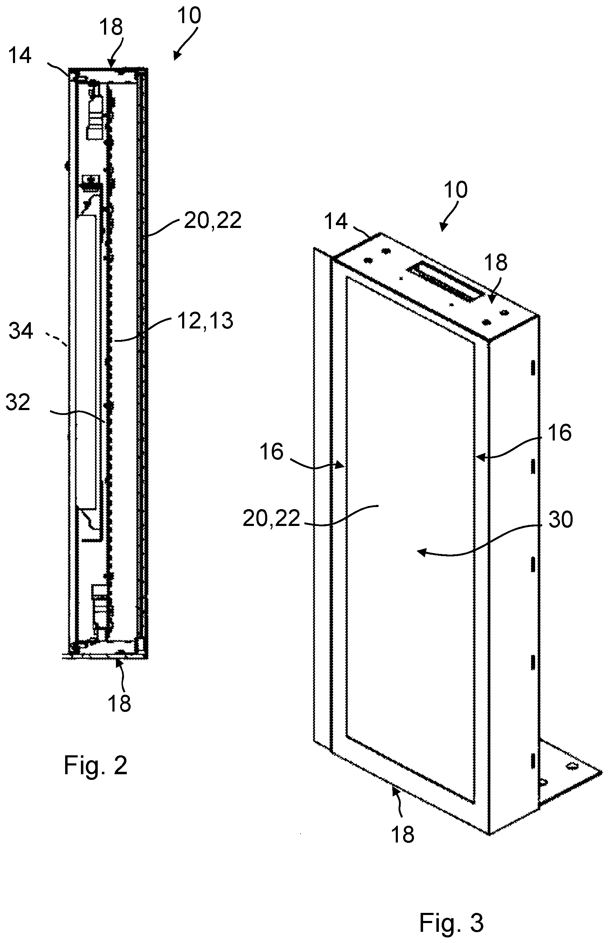

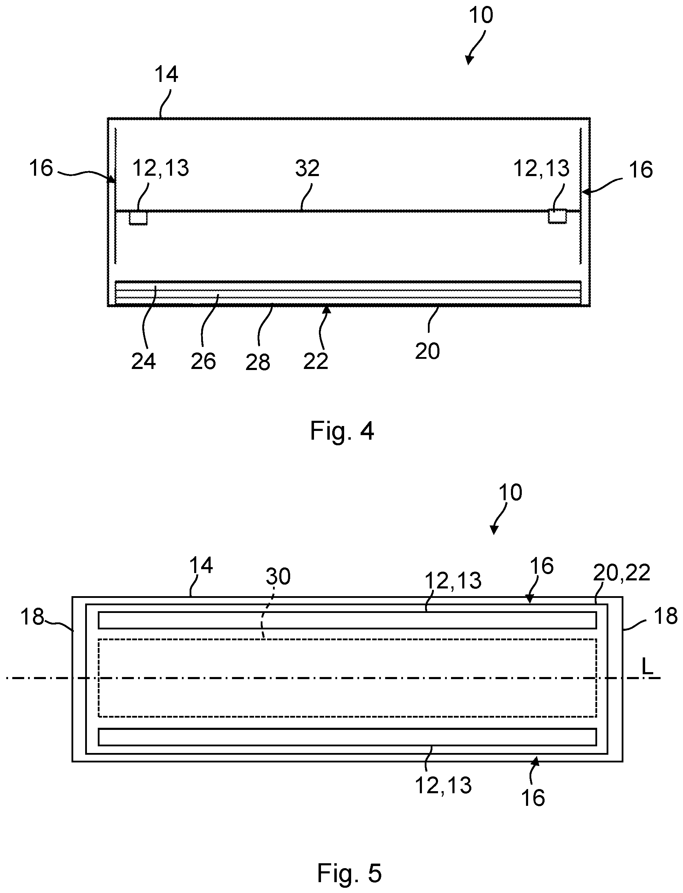

Figur 1 zeigt eine Draufsicht auf ein Leuchtenelement 10 nach einem Ausführungsbeispiel der Erfindung mit eingezeichneten Schnittlinien B-B und D-D, während das Leuchtenelement 10 in Figur 2 in dem Längsschnitt in der Schnittebene D-D und in Figur 3 in einer isometrischen Darstellung zu erkennen. In Figur 4 ist dazu der schematische Querschnitt in der Schnittebene B-B durch das Leuchtenelement 10 dargestellt.

Das Leuchtenelement 10 für einen Prüftunnel 100 umfasst zwei streifenförmige Anordnungen 12 von Lichtquellen 13 in einem Leuchtengehäuse 14. Das Leuchtengehäuse 14 weist zwei, entlang einer Längserstreckung L des Leuchtengehäuses 14 einander gegenüber liegenden Randbereichen 16. Die streifenförmigen Anordnungen 12 der Lichtquellen 13 sind entlang der Längserstreckung L an den Randbereichen 16 ausgebildet, wie insbesondere in Figur 2 und Figur 4 zu erkennen ist. Dadurch weist eine Lichtaustrittsfläche 20 des Leuchtengehäuses 14 entlang der Randbereiche 16 eine höhere Strahlungsstärke auf als in einem Mittenbereich 30.

Die Lichtquellen 13 können eine oder mehrere Leuchtdioden und/oder Leuchtstoffröhren und/oder Lichtleiter umfassen. Die Lichtquellen 13 können dabei farbvariabel, insbesondere als Leuchtdioden mit einstellbarer Farbtemperatur, ausgebildet sein.

Als Leuchtmittel können bevorzugt Leuchtdioden (LEDs) wie beispielsweise Mid-Power-LEDs mit einem Lichtstrom von 20 bis 100 Lumen und einer Lichtausbeute von ca. 180 Lumen/Watt) zum Einsatz kommen. Alternativ können jedoch auch Bauarten nach dem Leuchtstoffröhrenkonzept eingesetzt werden.

Die Lichtquellen 13 sind zur mechanischen Fixierung auf einem Trägerelement 32 angeordnet. Das Trägerelement 32 kann insbesondere zur Erhöhung der Reflexkontraste zur Lichtaustrittsfläche 20 hin reflektierend ausgebildet sein.

Die Lichtaustrittsfläche 20 des Leuchtengehäuses 14 wird durch ein Scheibenpaket 22 gebildet, welches wenigstens einen Diffusor 24 und eine Abdeckscheibe 28 aufweist. Bevorzugt kann zwischen dem Diffusor 24 und der Abdeckscheibe 28 noch eine Multiprismenscheibe 26 angeordnet sein, wie bei dem Ausführungsbeispiel in Figur 4 zu erkennen ist.

Der Leuchtenaufbau basiert auf dem Prinzip der Hinterleuchtung, wobei die Lichtstrahlen vor dem Verlassen des Leuchtenelements 10 durch ein Scheibenpaket 22 treten, das vorzugsweise aus einer diffusen Scheibe 24, einer Multiprismenscheibe 26 und einer schützenden Abdeckscheibe 28besteht. Die Multiprismenscheibe kann dabei insbesondere der zusätzlichen Reduktion einer möglichen Blendwirkung für den Inspekteur dienen.

Der Mittenbereich 30 der Lichtaustrittsfläche 20 kann vorteilhaft eine geringere Transparenz aufweisen als der Randbereich 16. Insbesondere kann der Mittenbereich lichtundurchlässig ausgebildet sein, beispielsweise indem ein lichtundurchlässiger Streifen auf den Diffusor aufgebracht wird, der zu der Lichtquelle 13 hin auch noch reflektierend ausgebildet sein kann.

Das Leuchtengehäuse 14 weist stirnseitige Anschlussbereiche 18 quer zu den Randbereichen 16 auf, welche zur Verbindung benachbarter Leuchtenelemente 10, 11 ausgebildet sind. Die stirnseitigen Anschlussbereiche 18 können dabei vorteilhaft als standardisierte Anschlusselemente zur mechanischen und/oder elektrischen Verbindung benachbarter Leuchtenelemente 10, 11 ausgebildet sein.

Das Leuchtengehäuse 14 kann rückseitig öffenbar ausgebildet sein, insbesondere mit einer Wartungsöffnung 34 versehen, wie sie in Figur 2 angedeutet ist. Damit kann ein Austausch von Lichtquellen 13 und/oder Treiberstufen vorteilhaft von der Rückseite des Leuchtengehäuses 14 erfolgen.

Alternativ kann das Leuchtengehäuse 14 auch geschlossen ausgebildet sein. Wenn ein Austausch der Lichtquellen 13 damit nicht vorgesehen ist, können diese auch auf dem Trägerelement 32 geklebt angeordnet sein.

Figur 5 zeigt einen schematischen Querschnitt von der Lichtsaustrittsseite 20 her durch ein Leuchtenelement 10 nach einem weiteren Ausführungsbeispiel der Erfindung. Entlang der beiden Randbereiche 16 sind Anordnungen 12 von Lichtquellen 13 angeordnet. Der Mittenbereich 30 der Lichtaustrittsfläche 20 kann vorteilhaft eine geringere Transparenz aufweisen als der Randbereich 16. Insbesondere kann der Mittenbereich lichtundurchlässig ausgebildet sein, beispielsweise indem ein lichtundurchlässiger Streifen auf den Diffusor 24, also auf der Innenseite des Scheibenpakets 22, aufgebracht wird, der zu den Lichtquellen 13 hin auch noch reflektierend ausgebildet sein kann.

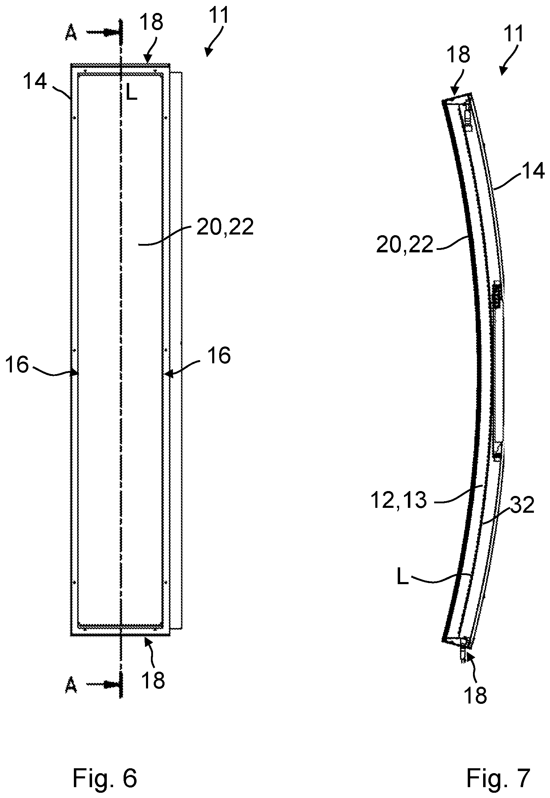

In Figur 6 ist eine Draufsicht auf ein gebogenes Leuchtenelement 11 nach einem weiteren Ausführungsbeispiel der Erfindung mit einer eingezeichneten Schnittlinie A-A dargestellt. Figur 7 zeigt dazu den Längsschnitt in der Schnittebene A-A durch das Leuchtenelement 11.

Der Aufbau des gebogenen Leuchtenelements 11 ist ähnlich dem Aufbau der in den Figuren 1 bis 5 dargestellten ebenen Leuchtenelemente 10. Der Unterschied ist, dass bei dem gebogenen Leuchtenelement 11 das Leuchtengehäuse 14 bogenförmig gekrümmt ausgebildet ist. Die Lichtaustrittsfläche 20 ist dabei zu einer konkaven Innenseite der bogenförmigen Krümmung hin ausgerichtet. Die Lichtquellen 13 sind auf dem ebenfalls gekrümmten Leuchteneinsatz 32 angeordnet. Auch das gebogene Leuchtenelement 11 weist an seinen Enden Anschlussbereiche 18 auf, mit denen das Leuchtenelement 11 mit anschließenden ebenen und/oder gebogenen Leuchtenelementen 10, 11 mechanisch und/oder elektrisch verbunden werden kann.

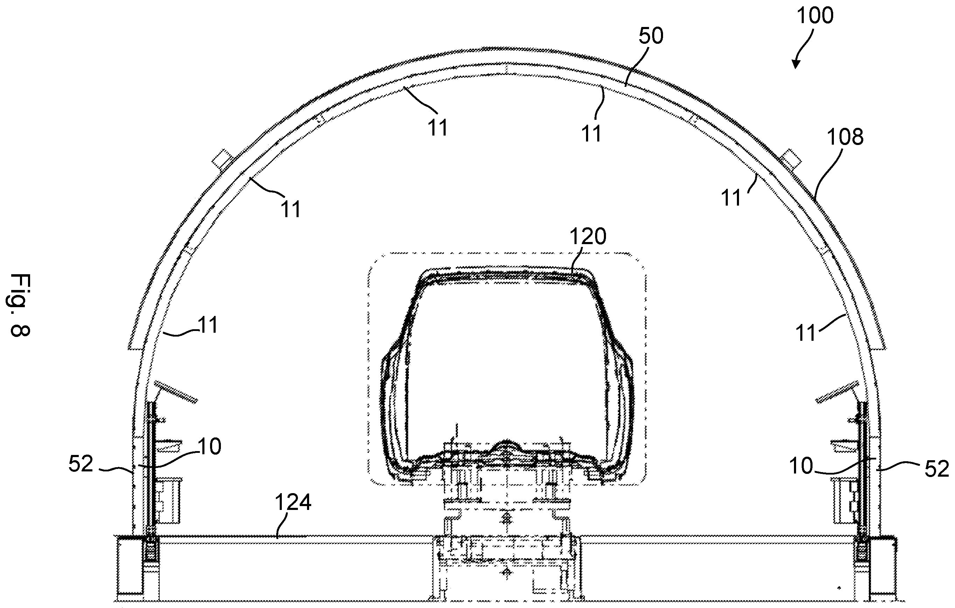

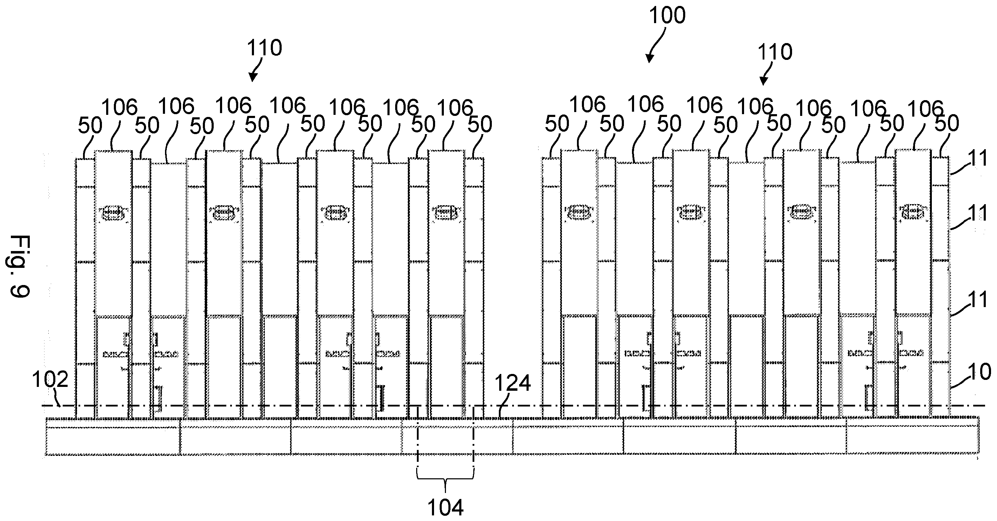

Figur 8 zeigt einen Querschnitt durch einen Prüftunnel 100 nach einem Ausführungsbeispiel der Erfindung, während in Figur 9 ein entsprechender Längsschnitt durch den Prüftunnel 100 dargestellt ist.

Der Prüftunnel 100 dient insbesondere zur Prüfung von lackierten Fahrzeugkarosserien 120, welche den Prüftunnel 100 entlang einer Tunnellängsachse 102 durchlaufen. Der Prüftunnel 100 weist eine Anordnung von mehreren Leuchtenbändern 50 auf, welche quer zu der Tunnellängsachse 102 nebeneinander angeordnet sind. Die Lichtaustrittsflächen 20 der Leuchtenelemente 10, 11 sind auf einer konkaven Innenseite der bogenförmigen Krümmung der Tunnelwandung 108 zu einem zentralen Bereich der Tunnellängsachse 102 hin ausgerichtet.

Ein Leuchtenband 50 umfasst dabei mehrere Leuchtenelemente 10, 11, welche an ihren stirnseitigen Anschlussbereichen 18 miteinander verbunden sind. Insbesondere sind die Leuchtenelemente 10, 11 wenigstens bereichsweise auf einer bogenförmig gekrümmten Linie angeordnet, wobei die Lichtaustrittsflächen 20 der Leuchtenelemente 10, 11 zu der konkaven Innenseite der bogenförmigen Krümmung hin ausgerichtet sind. Endstücke 52 eines Leuchtenbandes 50 sind dabei durch ebene Leuchtenelemente 10 gebildet, zwischen denen mehrere gekrümmte Leuchtenelemente 11 angeordnet sind.

Die zu einem Leuchtenband 50, welches beispielsweise eine bogenähnliche Struktur aufweisen kann, gefügten einzelnen Leuchtenelemente 10, 11 können so stirnseitig miteinander verschraubt sein. Dafür können z.B. 6 gebogene Leuchtenelemente 11 mit je 1420 mm Länge und 2 ebene Leuchtenelemente 10 mit je 750 mm eingesetzt werden. Dadurch, dass die Lichtaustrittsfläche 20 annähernd die Länge des Leuchtengehäuses 14 aufweist, entstehen in Umfangsrichtung nur minimale Strecken, auf denen die Lichtaustrittsfläche unterbrochen ist. Mit dieser nahezu kontinuierlichen Lichtaustrittsfläche 20 kann auf dem Substrat ein vorteilhaftes, da annähernd ununterbrochenes, Reflexbild entstehen.

Um einzelne Leuchtenelemente 10, 11 mit einer Einzellänge von z.B. 1400 mm zu einem durchgängigen Leuchtenband zu kombinieren, können diese, um leuchtfreie Bereiche zu vermeiden, an den Kopfseiten zusammengeschraubt oder zusammengesteckt werden. Hier könnten z.B. auch die Energiezufuhr und die Steuersignale über die Steckverbindung von einem Leuchtenelement 10, 11 zum nächsten weitergeleitet werden.

Durch die konzentrische Anordnung der Leuchtenelemente 10, 11 sind die Lichtstrahlen im Wesentlichen auf das Substrat, also beispielsweise eine lackierte Fahrzeugkarosserie 120 gerichtet. Das erhöht zum einen die Lichtausbeute und reduziert zum anderen die Direktblendung der Inspekteure.

Die Breite der einzelnen Leuchtenbänder 50 kann beispielsweise bei 200 mm liegen und der Freiraum zwischen den Lichtbögen beispielsweise 500 mm betragen. Damit ist sowohl eine ausreichend hohe Anzahl an Kontrastübergängen verfügbar, als auch ausreichend visuell "ungestörter" Raum, der ebenfalls zur Inspektion des gesamten Substrats benötigt wird.

Figur 9 zeigt im Querschnitt einen Prüftunnel 100 mit einer Vielzahl von Leuchtenbändern 50, welche in zwei sogenannten Takten 110 angeordnet sind. Die beiden Takte 110 sind dabei mit einem gewissen Abstand voneinander angeordnet, sodass zeitgleich in beiden Takten 110 eine Fahrzeugkarosserie 120 inspiziert werden kann. Die einzelnen Leuchtenbänder 50 sind durch Bereiche 106 voneinander getrennt angeordnet. Ein Takt 110 kann beispielsweise eine Länge von 6,3 m aufweisen.

Die Leuchtenbänder 50 eines Taktes sind in einem vorgegebenen Rastermaß 104 beabstandet angeordnet, das beispielsweise 0,70 m betragen kann, während der Abstand zwischen den beiden Takten beispielsweise 0,8 m betragen kann.

Die Bereiche 106 zwischen den Leuchtenbändern 50 können Material bzw. Oberflächen vorgegebener, insbesondere unterschiedlicher Reflexionsgrade aufweisen. Insbesondere können dabei Reflexionsgrade zwischen 20% und 70%, bevorzugt zwischen 27% und 55%, bezogen auf einen Wellenlängenbereich sichtbaren Lichts und bei senkrechtem Lichteinfall, vorgesehen sein, um eine möglichst gute Kontrastsituation für die Untersuchung von Substraten zu erhalten.

Zusätzlich kann in einem Prüftunnel 100 wenigstens ein Leuchtenband 50 parallel zur Tunnellängsachse 102 verlaufend angeordnet sein, wobei die Lichtaustrittsflächen 20 der Leuchtenelemente 10, 11 zur Tunnellängsachse 102 hin ausgerichtet sind.

Weiter ist auch möglich, dass Leuchtenbänder 50 im Boden 124 in Tunnellängsachse 102 und/oder quer zur Tunnellängsachse 102 angeordnet sind.

Gerade bei der Inspektion von z.B. Haube und Heckdeckel einer Karosserie 120 kann es vorteilhaft sein, längs verbaute Leuchtenbänder 50 zu installieren, da dort häufig eine Bewegung des Kontrolleurs quer zur Karosserie 120 stattfindet. Bei dieser natürlichen Bewegung des Kontrolleurs quer zur Karosserie 120 findet dann ein Kontrastwechsel hell/dunkel ohne zusätzliche Kopfbewegung statt.

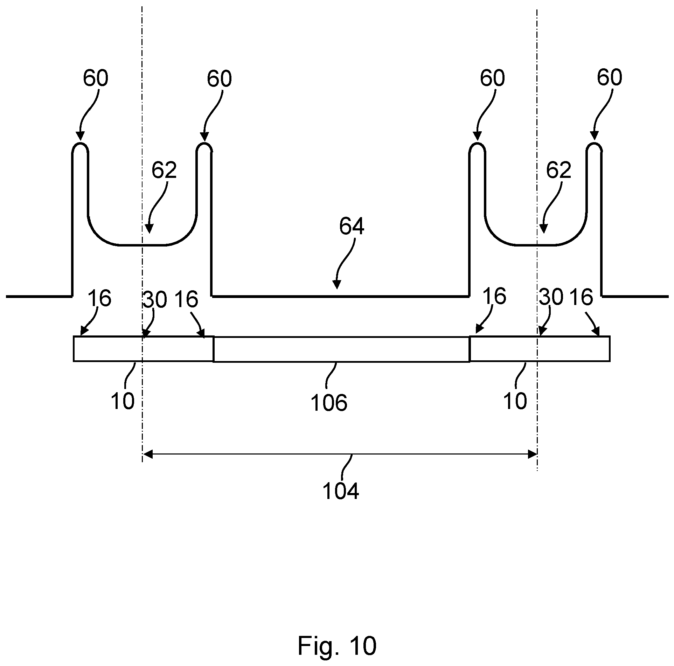

Figur 10 zeigt einen Leuchtdichteverlauf quer über zwei erfindungsgemäße Leuchtenelemente 10, welche durch einen Bereich 106 beabstandet angeordnet sind. Dabei sind Leuchtdichtebereiche 60 an den Randbereichen 16 der Leuchtenelemente 10 mit einer sehr hohen Leuchtdichte zu erkennen. Der Anstieg und Abfall der Leuchtdichte verläuft in diesen Bereichen 60 sehr steil, sodass dort ein hoher Kontrast auftritt, der eine Wahrnehmung punktueller Fehler auf einem Substrat begünstigt. Zwischen den Leuchtdichtebereichen 60 mit hoher Leuchtdichte ist jeweils ein Bereich 62 niedriger Leuchtdichte im Mittenbereich 30 der Leuchtenelemente 10 zu erkennen. Der Bereich 106 zwischen den beiden Leuchtenelementen 10 weist einen Dunkelbereich 64 auf.

Optional können Lichtquellen 13 mit LEDs variabler Farbtemperatur Verwendung finden. Damit kann dann z.B. die Lichtfarbe an den Farbton des Substrats oder an die Vorstellung des Inspekteurs angepasst werden.

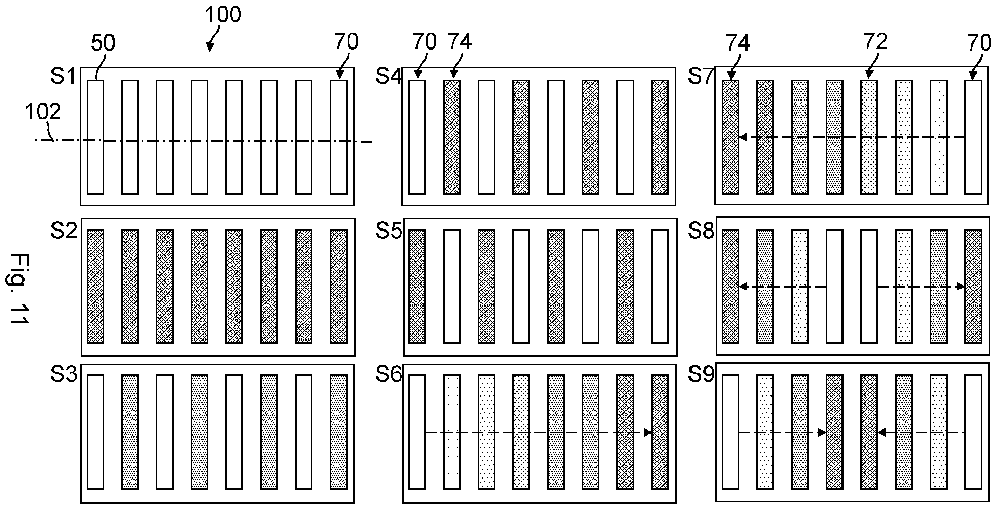

In Figur 11 sind mögliche Farbtemperaturanordnungen von Leuchtenbändern 50 eines Prüftunnels 100 nach einem Ausführungsbeispiel der Erfindung dargestellt.

Leuchtenelemente 10, 11 verschiedener Leuchtenbänder 50 eines Prüftunnels können Lichtquellen 13 unterschiedlicher Farbtemperaturen aufweisen. Insbesondere können die Farbtemperaturen im Bereich zwischen 2700 K und 6500 K variieren. Benachbarte Leuchtenbänder 50 können dabei alternierende Reihenfolgen von hohen und niedrigen Farbtemperaturen aufweisen.

Die Lichtfarbe der Lichtquellen 13 in einem Leuchtenband 50 kann entweder fix sein und sich z.B. zwischen 2700 K (warmweiß) und 6500 K (kaltweiß) bewegen. So können beispielsweise abwechselnd kaltweiße und warmweiße Leuchtenbänder 50 oder andere Reihenfolgen zum Einsatz kommen.

Die Leuchtenelemente 10 können dimmbar ausgeführt sein. Der Grad der Dimmung kann sich z.B. am Farbton des Substrats orientieren. Der Farbton des Leuchtenelements 10 kann an den Farbton des Substrats angepasst werden.

In Figur 11 sind verschiedene mögliche Farbtemperaturanordnungen S1 bis S9 dargestellt. Diese Darstellung soll jedoch nicht beschränkend zu verstehen sein, andere Farbtemperaturkombinationen sind durchaus denkbar.

Leuchtenelemente 50 mit hoher Farbtemperatur 70 sind dabei weiß dargestellt, während Leuchtenelemente 50 mit mittlerer Farbtemperatur 72 gepunktet und Leuchtenelemente 50 mit niedriger Farbtemperatur 74 dicht gepunktet dargestellt sind. Dazwischen sind jedoch weitere Abstufungen dargestellt. Die eingezeichneten Pfeile sollen den Verlauf der Farbtemperaturen von hohen Farbtemperaturen 70 zu niedrigen Farbtemperaturen 74 verdeutlichen. Der Übersichtlichkeit halber sind nur einzelne Leuchtenelemente 50 mit Bezugszeichen versehen.
- 10: Leuchtenelement
- 11: gebogenes Leuchtenelement streifenförmige Anordnung von
- 12: Lichtquellen
- 13: Lichtquelle
- 14: Leuchtengehäuse
- 16: Randbereich
- 18: Anschlussbereich
- 20: Lichtaustrittsfläche
- 22: Scheibenpaket
- 24: Diffusor
- 26: Multiprismenscheibe
- 28: Abdeckscheibe
- 30: Mittenbereich
- 32: Leuchteneinsatz
- 34: Wartungsöffnung

- 50: Leuchtenband
- 52: Endstück
- 60: hoher Kontrast
- 62: niedrige Leuchtstärke
- 64: Dunkelbereich

- 70: hohe Farbtemperatur
- 72: mittlere Farbtemperatur
- 74: niedrige Farbtemperatur

- 100: Prüftunnel
- 102: Tunnellängsachse
- 104: Rastermaß
- 106: Bereich
- 108: Tunnelwandung
- 110: Takt

- 120: Fahrzeugkarosserie
- 124: Boden
- L: Längserstreckung

## Patentansprüche

1. Prüftunnel (100) mit einer Tunnellängsachse (102), insbesondere zur Prüfung von glänzenden, insbesondere lackierten Fahrzeugkarosserien (120), mit einer Anordnung von mehreren Leuchtenbändern (50), wobei
die Leuchtenbänder (50) eine Anordnung von Leuchtenelementen (10, 11) aufweisen,
wobei die Leuchtenelemente (10, 11) an ihren stirnseitigen Anschlussbereichen (18) miteinander verbunden sind, insbesondere wobei die Leuchtenelemente (10, 11) wenigstens bereichsweise auf einer bogenförmig gekrümmten Linie angeordnet sind, wobei die Lichtaustrittsflächen (20) der Leuchtenelemente (10, 11) zu einer konkaven Innenseite einer bogenförmigen Krümmung hin ausgerichtet sind,
wobei die Leuchtenelemente (10, 11) wenigstens zwei streifenförmige Anordnungen (12) von Lichtquellen (13) in einem Leuchtengehäuse (14) mit wenigstens zwei entlang einer Längserstreckung (L) des Leuchtengehäuses (14) einander gegenüber liegenden Randbereichen (16) umfassen,
wobei die streifenförmigen Anordnungen (12) der Lichtquellen (13) entlang der Längserstreckung (L) an den Randbereichen (16) ausgebildet sind, wobei eine Lichtaustrittsfläche (20) des Leuchtengehäuses (14) entlang der Randbereiche (16) eine höhere Strahlungsstärke aufweist als in einem Mittenbereich (30),
und
wobei die Leuchtenbänder (50) quer zu der Tunnellängsachse (102) nebeneinander angeordnet sind, **dadurch gekennzeichnet, dass** die Lichtaustrittsflächen (20) der Leuchtenelemente (10, 11) auf einer konkaven Innenseite der bogenförmigen Krümmung einer Tunnelwandung (108) zu einem zentralen Bereich der Tunnellängsachse (102) hin ausgerichtet sind.

2. Prüftunnel nach Anspruch 1, wobei die Leuchtenbänder (50) in einem vorgegebenen Rastermaß (104) beabstandet angeordnet sind.

3. Prüftunnel nach Anspruch 1 oder 2, wobei Endstücke (52) durch ebene Leuchtenelemente (10) gebildet sind, zwischen denen gekrümmte Leuchtenelemente (11) angeordnet sind.

4. Prüftunnel nach einem der vorhergehenden Ansprüche, wobei Leuchtenelemente (10, 11) verschiedener Leuchtenbänder (50) Lichtquellen (13) mit unterschiedlicher Farbtemperatur aufweisen, insbesondere im Bereich zwischen 2700 K und 6500 K, insbesondere wobei benachbarte Leuchtenbänder (50) alternierende Reihenfolgen von hohen und niedrigen Farbtemperaturen aufweisen.

5. Prüftunnel nach einem der vorhergehenden Ansprüche, wobei Bereiche (106) zwischen den Leuchtenbändern (50) Oberflächen vorgegebener, insbesondere unterschiedlicher Reflexionsgrade, insbesondere Reflexionsgrade zwischen 20% und 70%, bevorzugt zwischen 27% und 55%, bezogen auf einen Wellenlängenbereich sichtbaren Lichts und bei senkrechtem Lichteinfall, aufweisen.

6. Prüftunnel nach einem der vorhergehenden Ansprüche, wobei wenigstens ein Leuchtenband (50) parallel zur Tunnellängsachse (102) verlaufend angeordnet ist, wobei die Lichtaustrittsflächen (20) der Leuchtenelemente (10, 11) zur Tunnellängsachse (102) hin ausgerichtet sind.

7. Prüftunnel nach einem der vorhergehenden Ansprüche, wobei Leuchtenbänder (50) im Boden (124) in Tunnellängsachse (102) und/oder quer zur Tunnellängsachse (102) angeordnet sind.

8. Prüftunnel nach einem der vorhergehenden Ansprüche, wobei die Lichtaustrittsfläche (20) des Leuchtengehäuses (14) wenigstens einen Diffusor (24) und eine Abdeckscheibe (28) aufweist,
insbesondere wobei zwischen dem Diffusor (24) und der Abdeckscheibe (28) eine Multiprismenscheibe (26) angeordnet ist.

9. Prüftunnel nach einem der vorhergehenden Ansprüche, wobei die Lichtquellen (13) eine oder mehrere Leuchtdioden und/oder eine oder mehrere Leuchtstoffröhren und/oder einen oder mehrere Lichtleiter umfassen.

10. Prüftunnel nach einem der vorhergehenden Ansprüche, wobei die Lichtquellen (13) farbvariabel, insbesondere als Leuchtdioden mit einstellbarer Farbtemperatur, ausgebildet sind.

11. Prüftunnel nach einem der vorhergehenden Ansprüche, wobei das Leuchtengehäuse (14) stirnseitige Anschlussbereiche (18) quer zu den Randbereichen (16) aufweist, welche zur Verbindung benachbarter Leuchtenelemente (10, 11) ausgebildet sind,
insbesondere wobei die stirnseitigen Anschlussbereiche (18) als standardisierte Anschlusselemente zur mechanischen und/oder elektrischen Verbindung benachbarter Leuchtenelemente (10, 11) ausgebildet sind.

12. Prüftunnel nach einem der vorhergehenden Ansprüche, wobei das Leuchtengehäuse (14) bogenförmig gekrümmt ausgebildet ist, wobei die Lichtaustrittsfläche (20) zu der konkaven Innenseite der bogenförmigen Krümmung hin ausgerichtet ist.

13. Prüftunnel nach einem der vorhergehenden Ansprüche, wobei der Mittenbereich (30) der Lichtaustrittsfläche (20) eine geringere Transparenz aufweist als der Randbereich (16), insbesondere wobei der Mittenbereich (30) lichtundurchlässig ausgebildet ist.

14. Prüftunnel nach einem der vorhergehenden Ansprüche, wobei das Leuchtengehäuse (14) rückseitig öffenbar ausgebildet ist, insbesondere wobei das Leuchtengehäuse (14) rückseitig mit einer Wartungsöffnung (34) ausgebildet ist.

15. Prüftunnel nach einem der vorhergehenden Ansprüche, wobei die Lichtquellen (13) auf einem Trägerelement (32) angeordnet sind, insbesondere wobei das Trägerelement (32) zur Lichtaustrittsfläche (20) hin reflektierend ausgebildet ist.

16. Prüftunnel nach einem der Ansprüche 1 bis 15, wobei das Leuchtengehäuse (14) geschlossen ausgebildet ist und/oder die Lichtquellen (13) auf einem Trägerelement (32) geklebt angeordnet sind.

## Claims

1. Test tunnel (100) having a longitudinal tunnel axis (102), in particular for testing shiny, in particular painted, vehicle bodies (120), having an arrangement of a plurality of luminaire bands (50), wherein
the luminaire bands (50) have an arrangement of luminaire elements (10, 11),
wherein the luminaire elements (10, 11) are connected to one another at their end-side connection regions (18), in particular wherein the luminaire elements (10, 11) are arranged at least in regions on an arc-shaped line, wherein the light exit surfaces (20) of the luminaire elements (10, 11) are oriented towards a concave inner side of an arc-shaped curvature,
wherein the luminaire elements (10, 11) comprise at least two strip-shaped arrangements (12) of light sources (13) in a luminaire housing (14) with at least two edge regions (16) located opposite one another along a longitudinal extent (L) of the luminaire housing (14),
wherein the strip-shaped arrangements (12) of the light sources (13) are formed along the longitudinal extent (L) at the edge regions (16), wherein a light exit surface (20) of the luminaire housing (14) has a higher radiation intensity along the edge regions (16) than in a centre region (30),
and
wherein the luminaire bands (50) are arranged side by side transversely to the tunnel longitudinal axis (102), **characterized in that** the light exit surfaces (20) of the luminaire elements (10, 11) on a concave inner side of the arc-shaped curvature of a tunnel wall (108) are oriented towards a central region of the tunnel longitudinal axis (102).

2. Test tunnel according to Claim 1, wherein the luminaire bands (50) are spaced at a predetermined grid dimension (104).

3. Test tunnel according to Claim 1 or 2, wherein end pieces (52) are formed by planar luminaire elements (10), between which curved luminaire elements (11) are arranged.

4. Test tunnel according to any of the preceding claims, wherein luminaire elements (10, 11) of different luminaire bands (50) have light sources (13) having different colour temperatures, in particular in the range between 2700 K and 6500 K, in particular wherein adjacent luminaire bands (50) have alternating sequences of high and low colour temperatures.

5. Test tunnel according to any of the preceding claims, wherein regions (106) between the luminaire bands (50) have surfaces of predetermined, in particular different, reflectances, in particular reflectances of between 20% and 70%, preferably between 27% and 55%, based on a wavelength range of visible light and with perpendicular light incidence.

6. Test tunnel according to any of the preceding claims, wherein at least one luminaire band (50) is arranged parallel to the tunnel longitudinal axis (102), wherein the light exit surfaces (20) of the luminaire elements (10, 11) are oriented towards the tunnel longitudinal axis (102).

7. Test tunnel according to any of the preceding claims, wherein luminaire bands (50) are arranged in the ground (124) in the longitudinal tunnel axis (102) and/or transversely to the longitudinal tunnel axis (102).

8. Test tunnel according to any of the preceding claims, wherein the light exit surface (20) of the luminaire housing (14) has at least one diffuser (24) and a cover plate (28),
in particular wherein a multi-prism plate (26) is arranged between the diffuser (24) and the cover plate (28).

9. Test tunnel according to any of the preceding claims, wherein the light sources (13) comprise one or more light-emitting diodes and/or one or more fluorescent tubes and/or one or more light guides.

10. Test tunnel according to any of the preceding claims, wherein the light sources (13) are colour-variable, in particular are designed as light-emitting diodes with adjustable colour temperature.

11. Test tunnel according to any of the preceding claims, wherein the luminaire housing (14) has end-side connection regions (18) transversely to the edge regions (16), which are designed for connecting adjacent luminaire elements (10, 11),
in particular wherein the end-side connection regions (18) are formed as standardized connection elements for the mechanical and/or electrical connection of adjacent luminaire elements (10, 11).

12. Test tunnel according to any of the preceding claims, wherein the luminaire housing (14) is arc-shaped, wherein the light exit surface (20) is oriented towards the concave inner side of the arc-shaped curvature.

13. Test tunnel according to any of the preceding claims, wherein the centre region (30) of the light exit surface (20) has a lower transparency than the edge region (16), in particular wherein the centre region (30) is designed to be opaque.

14. Test tunnel according to any of the preceding claims, wherein the luminaire housing (14) is designed to be openable at the rear, in particular wherein the luminaire housing (14) is designed with a maintenance opening (34) at the rear.

15. Test tunnel according to any of the preceding claims, wherein the light sources (13) are arranged on a carrier element (32), in particular wherein the carrier element (32) is designed to be reflective towards the light exit surface (20).

16. Test tunnel according to any of Claims 1 to 15, wherein the luminaire housing (14) is designed to be closed and/or the light sources (13) are adhesively bonded on a carrier element (32).

## Revendications

1. Tunnel de contrôle (100) avec un axe longitudinal de tunnel (102), notamment pour le contrôle des carrosseries de véhicules (120) brillantes, en particulier peintes, comprenant un arrangement de plusieurs bandes lumineuses (50),
les bandes lumineuses (50) possédant un arrangement d'éléments lumineux (10, 11),
les éléments lumineux (10, 11) étant reliés entre eux au niveau de leurs zones de raccordement (18) côté frontal, les éléments lumineux (10, 11) étant notamment disposés, au moins dans certaines zones, sur une ligne courbée en forme d'arc, les surfaces de sortie de lumière (20) des éléments lumineux (10, 11) étant orientées vers un côté intérieur concave d'une courbure en forme d'arc,
les éléments lumineux (10, 11) comportant au moins deux arrangements en forme de bandes (12) de sources de lumière (13) dans un boîtier de luminaire (14) avec au moins deux zones de bordure (16) situées en vis-à-vis l'une de l'autre le long d'une extension longitudinale (L) du boîtier de luminaire (14),
les arrangements en forme de bandes (12) des sources de lumière (13) étant formés le long de l'extension longitudinale (L) au niveau des zones de bordure (16), une surface de sortie de lumière (20) du boîtier de luminaire (14) présentant, le long des zones de bordure (16), une intensité de rayonnement plus élevée que dans une zone centrale (30),
et
les bandes lumineuses (50) étant disposées les unes à côté des autres transversalement à l'axe longitudinal de tunnel (102), **caractérisé en ce que** les surfaces de sortie de lumière (20) des éléments lumineux (10, 11) sont orientées sur un côté intérieur concave de la courbure en forme d'arc d'une paroi de tunnel (108) vers une zone centrale de l'axe longitudinal de tunnel (102).

2. Tunnel de contrôle selon la revendication 1, les bandes lumineuses (50) étant disposées espacées selon une dimension modulaire (104) prédéfinie.

3. Tunnel de contrôle selon la revendication 1 ou 2, des pièces d'extrémité (52) étant formées par des éléments lumineux plans (10) entre lesquels sont disposés des éléments lumineux courbés (11).

4. Tunnel de contrôle selon l'une des revendications précédentes, des éléments lumineux (10, 11) de différentes bandes lumineuses (50) possédant des sources de lumière (13) ayant différentes températures de couleur, en particulier dans la plage de 2700 K à 6500 K, les bandes lumineuses (50) voisines présentant notamment des séquences alternées de couleurs de température élevées et basses.

5. Tunnel de contrôle selon l'une des revendications précédentes, des zones (106) entre les bandes lumineuses (50) présentant des surfaces ayant des degrés de réflexion prédéfinis, notamment différents, en particulier des degrés de réflexion compris entre 20 % et 70 %, de préférence entre 27 % et 55 %, par rapport à une plage de longueurs d'onde de la lumière visible et avec une incidence perpendiculaire de la lumière.

6. Tunnel de contrôle selon l'une des revendications précédentes, au moins une bande lumineuse (50) étant disposée en suivant un tracé parallèle à l'axe longitudinal de tunnel (102), les surfaces de sortie de lumière (20) des éléments lumineux (10, 11) étant orientées vers l'axe longitudinal de tunnel (102).

7. Tunnel de contrôle selon l'une des revendications précédentes, des bandes lumineuses (50) étant disposées dans le sol (124) dans l'axe longitudinal de tunnel (102) et/ou transversalement à l'axe longitudinal de tunnel (102).

8. Tunnel de contrôle selon l'une des revendications précédentes, la surface de sortie de lumière (20) du boîtier de luminaire (14) possédant au moins un diffuseur (24) et une vitre de protection (28),
une vitre à prismes multiples (26) étant notamment disposée entre le diffuseur (24) et la vitre de protection (28).

9. Tunnel de contrôle selon l'une des revendications précédentes, les sources de lumière (13) comportant une ou plusieurs diodes électroluminescentes et/ou un ou plusieurs tubes fluorescents et/ou un ou plusieurs guides de lumière.

10. Tunnel de contrôle selon l'une des revendications précédentes, les sources de lumière (13) étant réalisées à couleur variable, notamment sous la forme de diodes électroluminescentes à température de couleur réglable.

11. Tunnel de contrôle selon l'une des revendications précédentes, le boîtier de luminaire (14) possédant des zones de raccordement (18) côté frontal transversales aux zones de bordure (16), lesquelles sont configurées pour la connexion d'éléments lumineux (10, 11) voisins,
les zones de raccordement (18) côté frontal étant notamment réalisées sous la forme d'éléments de raccordement normalisés pour la connexion mécanique et/ou électrique d'éléments lumineux (10, 11) voisins.

12. Tunnel de contrôle selon l'une des revendications précédentes, le boîtier de luminaire (14) étant courbé en forme d'arc, la surface de sortie de lumière (20) étant orientée vers le côté intérieur concave de la courbure en forme d'arc.

13. Tunnel de contrôle selon l'une des revendications précédentes, la zone centrale (30) de la surface de sortie de lumière (20) présentant une transparence plus faible que la zone de bordure (16), la zone centrale (30) étant notamment configurée opaque.

14. Tunnel de contrôle selon l'une des revendications précédentes, le boîtier de luminaire (14) étant configuré de manière à pouvoir être ouvert à l'arrière, le boîtier de luminaire (14) étant notamment configuré à l'arrière avec une ouverture de maintenance (34).

15. Tunnel de contrôle selon l'une des revendications précédentes, les sources de lumière (13) étant disposées sur un élément porteur (32), l'élément porteur (32) étant notamment configuré réfléchissant vers la surface de sortie de lumière (20).

16. Tunnel de contrôle selon l'une des revendications 1 à 15, le boîtier de luminaire (14) étant configuré fermé et/ou les sources de lumière (13) étant disposées collées sur un élément porteur (32).
